# EUROPEAN PATENT APPLICATION

(11) **EP 4 159 062 A1**
(43) Date of publication of application: **05.04.2023**
(21) Application number: 21938467.4
(22) Date of filing: 30.04.2021
(51) Int. Cl.: A24F 40/46

(54) **ATOMIZING UNIT, ASSEMBLY AND DEVICE HAVING HIGH STRENGTH**

(71) Applicant: Shenzhen Huachengda Precision Industry Co., Ltd., Shenzhen, Guangdong 518000 (CN)
(72) Inventor: CHEN, Ping, Shenzhen, Guangdong 518000 (CN)
(74) Representative: Westphal, Mussgnug & Partner, Patentanwälte mbB
(86) International application number: PCT/CN2021/091462
(87) International publication number: WO 2022/226993

(57) **Abstract**

An atomizing unit (1), an atomizing assembly (2) and an atomizing device (3) having high strength. The atomizing unit (1) comprises a support (12) and a heating member (11), wherein the heating member (11) comprises a heating portion (111), an electrode portion (112) and a fixing portion (113); two edges of the heating portion (111) in a first direction (a) are bent in a third direction (c) such that one side of the heating portion (111) that is in the third direction (c) is concave and the other side thereof is arched; and the concave side of the heating portion (111) and a cavity (12a) of the support (12) define a containing chamber (13) for accommodating a liquid conducting member, so as to allow an airflow to be blown to the arched side of the heating portion (111) to take atomized gas out. The atomizing assembly (2) comprises the atomizing unit (1), and the atomizing device (3) comprises the atomizing assembly (2). In the atomizing unit (1), the atomizing assembly (2) and the atomizing device (3), the arched side of the heating member (11) is better adapted to the flowing of the airflow, so that heat from an atomizing surface can be more uniform, the heating member is not easily deformed, and a liquid conducting material is in good direct contact with the heating member (11). Since the heating portion is no longer circumferentially covered, different liquid feeding modes can be used according to requirements.

## Description

### FIELD

The present invention relates to the field of atomization, and more specifically, to an atomizing unit, an atomizing assembly and an atomizing device having high strength.

### BACKGROUND

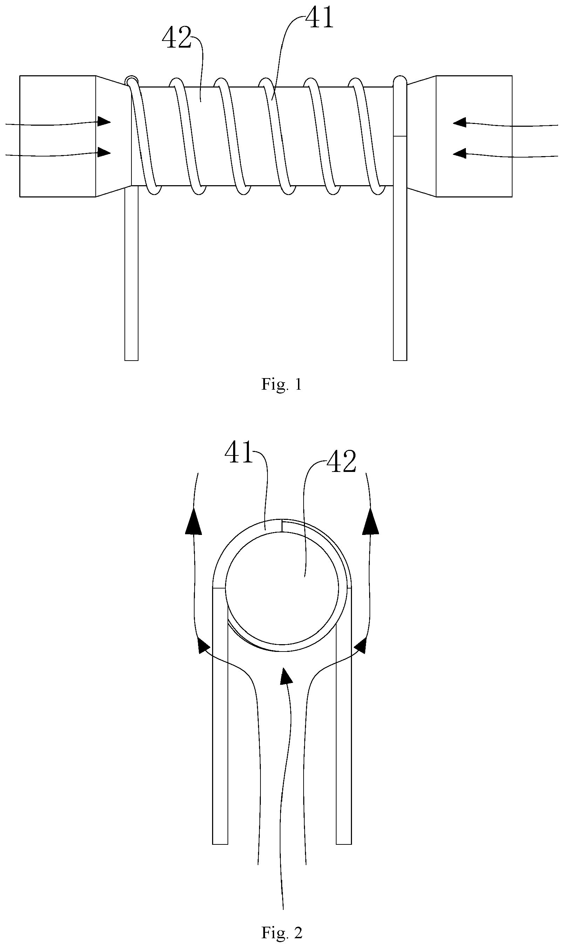

As shown in Fig. 1 to Fig. 2, in the traditional atomization heating scheme, the combination manner of the electric heating wire 41 and the liquid conducting cotton rope 42 is to wind the electric heating wire 41 around the periphery of the liquid conducting cotton rope 42. Although the structure is simple and easy to obtain, the structural strength is poor, and a deformation is easy to occur. Moreover, it can only be assembled manually, and its consistency is difficult to guarantee.

In addition, when the electric heating wire 41 and the liquid conducting cotton rope 42 work, the liquid is fed from the two ends of the liquid conducting cotton rope 42, then conducted to the liquid to the electric heating wire 41 via the liquid conducting cotton rope 42; the airflow from the lower direction of the electric heating wire 41 carries out the heated atomized steam. The problems to be generated are: 1, the liquid inlet mode is relatively single, and it is difficult to adopt other liquid inlet modes according to different requirements; 2, the heating mode is circumferential heating, but the airflow entering from the bottom of the electric heating wire 41 is normal-temperature air with a relatively low temperature, while the atomized steam at the top of the electric heating wire 41 has a relatively high temperature, it is difficult to ensure the temperatures in the atomizing area are uniform, thus the experience is poor, a carbon deposition and a core over-burning and the like are easy to occur, affecting the user experience.

Therefore, it is necessary to provide an atomizing unit having a good structural strength, capable of being designed with different liquid inlet modes, and having a balanced heating.

### SUMMARY

A technical problem to be solved by the present invention is, in view of the above defects in the prior art, to provide an atomizing unit, an atomizing assembly and an atomizing device having high strength.

A technical solution adopted by the present invention to solve the technical problem includes: providing an atomizing unit, including a support and a heating member that is sheet shaped and arranged on the support, wherein the heating member includes a heating portion, an electrode portion and a fixing portion; two sides of the heating portion in a first direction are bent in a third direction, so that one side of the heating portion in the third direction is concave and the other side of the heating portion in the third direction is arched; the heating portion includes a heating circuit electrically connected with the electrode portion to generate heat when the electrode portion is powered on; the fixing portion is embedded in the support; and

the support is provided with a cavity having an opening towards the first direction, the heating member is arranged on the support, the heating portion is arranged at the opening of the cavity, the fixing portion is embedded in the support; the concave side of the heating portion faces the cavity, and defines, with the cavity, a containing chamber configured for accommodating a liquid conducting member and making the liquid conducting member contact the heating member; the support is provided with a liquid inlet hole communicated to the containing chamber for a liquid to enter the containing chamber, and the first direction and the third direction are not parallel to each other,

thus, when the liquid conducting member is provided in the containing chamber and conducts the liquid from the liquid inlet hole to the heating member, the heating member heats and atomizes the liquid.

Preferably, the two sides of the heating portion in the first direction are bent in the third direction, so that the heating portion is arc-shaped.

Preferably, at least one part of the heating portion is bent to a right angle or an obtuse angle along an axis of a second direction, so that the two sides of the heating portion in the first direction are bent in the third direction, and the second direction is not parallel to the first direction and the third direction.

Preferably, two sides of the electrode portion in the first direction are bent towards one side in the third direction.

Preferably, at least two of the fixing portions are arranged at peripheries of the heating portion and/or the electrode portion.

Preferably, the fixing portion includes a first portion extending outwards and a second portion connected with the first portion, and the second portion protrudes in a direction perpendicular to or inclined to an extending direction of the first portion.

Preferably, the electrode portion includes two of the electrode portions respectively located on two sides of the heating portion in a second direction, the electrode portion extends outwards in a direction parallel to the second direction or at an angle to the second direction, and the second direction is not parallel to the first direction and the third direction.

Preferably, the support is provided with an air inlet for airflow to enter and an air vent for the airflow to outflow, the air inlet is communicated with the air vent, the arched side of the heating portion faces the air inlet direction of the air inlet, and the two sides of the heating portion in the first direction correspond to the air vent, to allow the airflow blowing to the arched side of the heating portion and flowing by the two sides of the heating portion in the first direction to take away the mist generated by the heating member.

Preferably, the support includes a base and two extending portions protruding from the base in a same direction, the two extending portions are spaced disposed in a second direction, the heating portion of the heating member is disposed between the two extending portions, a space between the protruding ends of the two extending portions forms the air inlet, an interval between the parts of the two extending portions adjacent to the heating portion forms the air vent, the air vent includes two of the air vents respectively located on the two sides, in the first direction, of the heating portion of the heating member, and the second direction is not parallel to the first direction and the third direction.

Preferably, the electrode portion includes two of the electrode portions respectively located on the two sides of the heating portion in the second direction, and the electrode portions on the two sides are respectively embedded in the extending portions on the two sides.

Preferably, the liquid inlet hole is arranged at a position facing the concave side of the heating portion.

Preferably, the support includes a base and a cover, the cavity is arranged in the base, two sides of the cavity in the third direction are open, the heating member is arranged at an open position on one side, the cover is arranged at another open position on the other side and covers the containing chamber, and the liquid inlet hole is arranged on the cover.

Preferably, the liquid inlet hole includes two of the liquid inlet holes respectively located on two sides of the support in a second direction.

Preferably, the liquid inlet holes are communicated with the containing chamber in a straight line, or the liquid inlet holes are communicated with the containing chamber obliquely; and the second direction is not parallel to the first direction and the third direction.

Preferably, the support includes a base and a cavity wall, the cavity wall is bent to form the cavity open to the third direction, and at least part of the fixing portion is embedded in the cavity wall.

Preferably, the support is provided with an air outlet hole, and the air outlet hole and the heating member are respectively arranged on two sides of the support in the third direction.

Preferably, the support includes a cover, the cavity wall is provided with a through hole that is communicated with the cavity and located at a position facing the concave side of the heating portion, and the cover penetrates in the through hole and extends in the cavity, so that when the liquid conducting member is provided in the containing chamber, the cover presses the liquid conducting member to make the liquid conducting member contact the heating member.

Preferably, the support is made of plastic, and the heating member is combined with the support through an in-mold injection.

The technical solution adopted by the present invention to solve the technical problem includes: providing an atomizing assembly, including a liquid conducting member and the above atomizing unit, wherein the liquid conducting member is disposed in the containing chamber of the atomizing unit and is in contact with the heating member, to conduct the liquid from the liquid inlet hole to the heating member for heating and atomizing.

The technical solution adopted by the present invention to solve the technical problem includes: providing an atomizing device, including a housing and the atomizing assembly of claim 19 that is disposed in the housing, wherein the housing is provided with an air outlet passage and an air inlet passage, so that airflow sequentially passes through the air inlet passage, the heating member and the air outlet passage, to bring out the mist heated and atomized by the heating member.

Implementation of the present invention provides at least the following beneficial effects: in the atomizing unit, the atomizing assembly and the atomizing device of the present invention, the arched side of the heating member is better adapted to the flowing of the airflow, which can make the heat of the atomizing surface more uniform; the support provides a support strength for the heating member to prevent the deformation of the heating member, meanwhile, defines, with the heating member, the containing chamber for accommodating the liquid conducting member, and presses the liquid conducting member to ensure a good direct contact between the liquid conducting material and the heating member; since the heating portion is no longer circumferentially covered, different liquid inlet manners can be adopted according to requirements, and the liquid inlet hole may be disposed at different positions.

### BRIEF DESCRIPTION OF THE DRAWINGS

Subject matter of the present invention will be described in even greater detail below based on the exemplary figures, and in the accompanying drawings:
Fig. 1 is a main view of an electric heating wire and a liquid conducting cotton rope in the prior art;
Fig. 2 is a right view of the electric heating wire and the liquid conducting cotton rope in Fig. 1 (wherein the solid arrows indicate the airflow direction);
Fig. 3 is a perspective view of an atomizing unit in a first embodiment of the present invention;
Fig. 4 is an exploded view of the atomizing unit in Fig. 3;
Fig. 5 is an A-A sectional view of Fig. 3 (wherein the heating member is omitted);
Fig. 6 is the A-A sectional view of Fig. 3;
Fig. 7 is a perspective view of an atomizing assembly, including the atomizing unit in Fig. 3, in a first embodiment the present invention;
Fig. 8 is an exploded view of the atomizing assembly in Fig. 7;
Fig. 9 is a bottom view of the atomizing assembly in Fig. 7;
Fig. 10 is a B-B sectional view of Fig. 7 (wherein the solid arrows indicate the airflow direction);
Fig. 11 is a C-C sectional view of Fig. 7 (wherein the solid arrows indicate the liquid flow direction);
Fig. 12 is a perspective view of an atomizing unit in a second embodiment of the present invention;
Fig. 13 is an exploded view of the atomizing unit in Fig. 12;
Fig. 14 is a D-D sectional view of Fig. 12 (wherein the heating member is omitted);
Fig. 15 is the D-D sectional view of Fig. 12;
Fig. 16 is a perspective view of an atomizing assembly, including the atomizing unit in Fig. 12, in a second embodiment of the present invention;
Fig. 17 is an exploded view of the atomizing assembly in Fig. 16;
Fig. 18 is an E-E sectional view of Fig. 16 (wherein the solid arrows indicate the airflow direction);
Fig. 19 is an F-F sectional view of Fig. 16 (wherein the solid arrows indicate the flow direction of the liquid);
Fig. 20 is a perspective view of a heating member in a first embodiment of the present invention;
Fig. 21 is a schematic diagram from a right view angle of a heating member in a second embodiment of the present invention;
Fig. 22 is a schematic diagram from a right view angle of a heating member in a third embodiment of the present invention;
Fig. 23 is a schematic diagram from a right view angle of a heating member in a fourth embodiment of the present invention;
Fig. 24 is a perspective view of an atomizing device, including the atomizing assembly in Fig. 7, in a first embodiment of the present invention;
Fig. 25 is a G-G sectional view of Fig. 24 (wherein the solid arrows indicate the liquid flow direction);
Fig. 26 is an H-H sectional view of Fig. 24 (wherein the solid arrows indicate the airflow direction);
Fig. 27 is a perspective view of an atomizing device, including the atomizing assembly in Fig. 16, in a second embodiment of the present invention;
Fig. 28 is an I-I sectional view of (wherein the solid arrows indicate the flow direction of the liquid);
Fig. 29 is a J-J sectional view of (wherein the solid arrows indicate the airflow direction).

Wherein, the reference marks in the drawings represent: atomizing unit 1, heating member 11, heating portion 111, heating circuit 1111, electrode portion 112, fixing portion 113, first portion 1131, second portion 1132, support 12, base 121, extending portion 122, cavity wall 123, cover 124, cavity 12a, air inlet 12b, air vent 12c, liquid inlet hole 12d, air outlet hole 12e, through hole 12f, inner positioning step 12g, outer positioning step 12h, containing chamber 13, atomizing assembly 2, liquid conducting member 21, atomizing device 3, housing 31, air inlet passage 311, air outlet passage 312, liquid storage chamber 313, first direction a, second direction b, third direction c, electric heating wire 41 in the prior art, liquid conducting cotton rope 42 in the prior art.

### DETAILED DESCRIPTION

For better understanding of the technical features, objects and effects of the present invention, the specific embodiments of the present invention will be described in detail with reference to the accompanying drawings. In the description of the present invention, it should be understood that directions or location relationships indicated by terms "front", "rear", "upper", "lower", "left", "right", "longitudinal", "lateral", "vertical", "horizontal", "top", "bottom", "inner", "outer", "head", "tail" and the like are based on the directions or location relationships shown in the accompanying drawings, or the directions or location relationships that are usually placed or operated when the product is used, and are merely used for the convenience of describing the present invention, but are not used to indicate or imply that a device or an element needs to have a particular direction or be constructed and operated in a particular direction, and therefore, cannot be understood as a limitation to the present invention. It is further noted that, in the present invention, unless specified or limited otherwise, the terms "mounted", "connected", "coupled", "fixed", "arranged" and the like should be understood in a broad sense, for example, the connection may be a fixed connection, a detachable connection, or an integral connection; or the connection may be a direct connection, or an indirect connection through an intermediary, or the connection may be an internal communication between two elements or a mutual action relationship between two elements, unless otherwise specified explicitly. When one element is described to be located "above" or "under" another element, it means that the element may be "directly" or "indirectly" located above or under another element, or there may be one or more intervening element located therebetween. The terms "first", "second", "third" and the like are only used for the convenience of describing the technical solution, and cannot be understood as indicating or implying the relative importance or implicitly indicating the number of the indicated technical features. Therefore, features defined with "first", "second", "third", etc. may explicitly or implicitly indicates that one or more of these features may be included. For those of ordinary skill in the art, the specific meaning of the above-mentioned terms in the present invention can be understood according to specific circumstances.

In the description hereinbelow, for purposes of explanation rather than limitation, specific details such as specific systematic architectures and techniques are set forth in order to provide a thorough understanding of the embodiments of the present invention. However, it should be apparent to persons skilled in the art that the present invention may also be implemented in absence of such specific details in other embodiments. In other instances, detailed descriptions of well-known systems, devices, circuits, and methods are omitted so as not to obscure the description of the present invention with unnecessary detail.

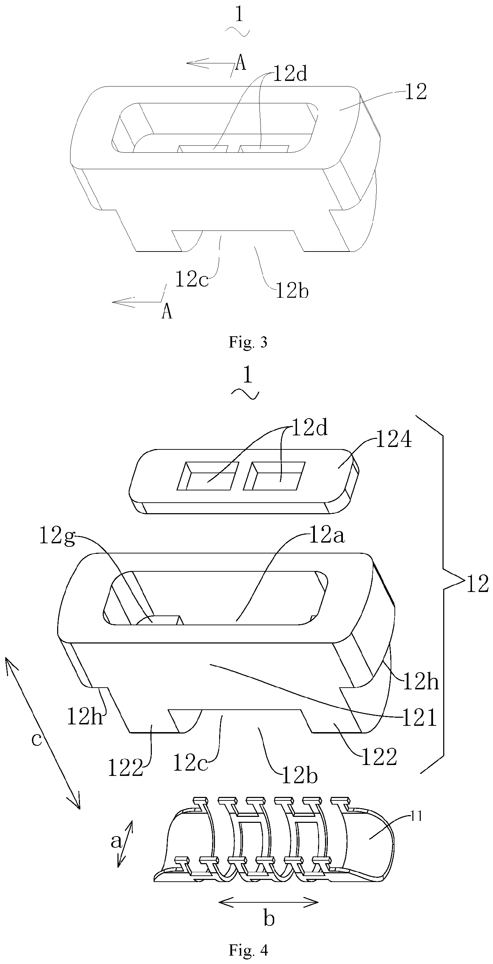

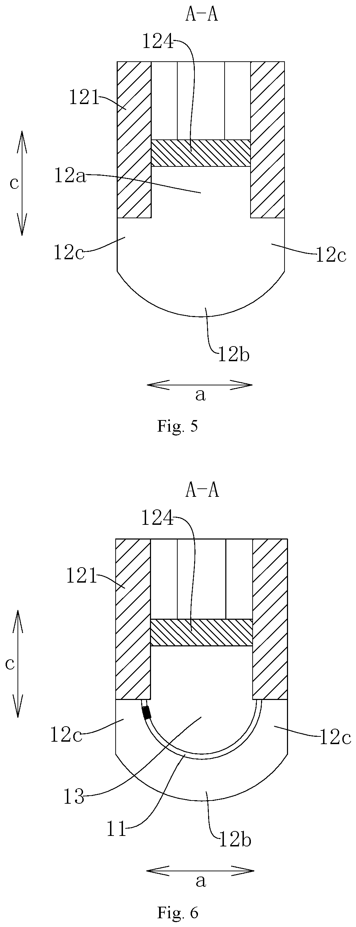

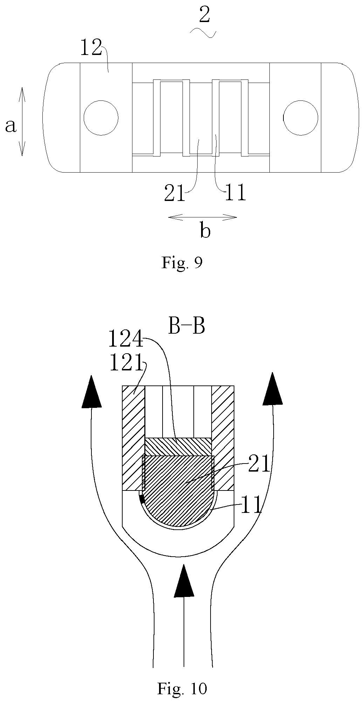

As shown in Fig. 3 to Fig. 11, an atomizing unit 1 in a first embodiment of the present invention includes a support 12 and a heating member 11 that is sheet shaped and arranged on the support 12. The heating member 11 includes a heating portion 111, an electrode portion 112 and a fixing portion 113. Two sides of the heating portion 111 in a first direction a are bent towards a same direction in a third direction c, so that one side of the heating portion 111 in the third direction c is concave and the other side is arched. The heating portion 111 includes a heating circuit 1111 electrically connected with the electrode portion 112 to generate heat when the electrode portion 112 is powered on. The fixing portion 113 is embedded in the support 12, and at least two fixing portions 113 are disposed at two side edges, in the first direction a and/or the second direction b, of the heating portion 111 and/or the electrode portion 112.

The support 12 is provided with a cavity 12a open to the first direction a, an air inlet 12b for airflow to enter, and an air vent 12c for the airflow to outflow. The air inlet 12b is communicated with the air vent 12c, the heating member 11 is arranged on the support 12, the heating portion 111 is arranged at the opening of the cavity 12a, and the fixing portion 113 is embedded in the support 12, so that the heating member 11 is firmly connected with the support 12. The concave side of the heating portion 111 faces the cavity 12a and defines, with the cavity 12a, a containing chamber 13 configured for containing a liquid conducting member 21 and making the liquid conducting member 21 contact with the heating member 11. The support 12 is provided with a liquid inlet hole 12d communicated to the containing chamber 13 for the liquid to enter the containing chamber 13. The arched side of the heating portion 111 faces outward and faces the air inlet direction of air inlet 12b, and the two sides, in the first direction a, of the heating portion 111 correspond to the air vent 12c, so that the airflow blows to the arched side of the heating portion 111 and flows by the two sides, in the first direction a, of the heating portion 111.

The first direction a, the second direction b and the third direction c are not parallel to each other. Preferably, the first direction a, the second direction b and the third direction c are perpendicular to each other.

Thus, when a liquid conducting member 21 is provided in the containing chamber 13 and the liquid from the liquid inlet hole 12d is transmitted to the heating member 11, the heating member 11 heats and atomizes the liquid, and the atomized gas is taken away by the airflow entering the air inlet 12b.

A liquid conducting member 21 may be provided in the containing chamber 13 of the atomizing unit 1. The liquid conducting member 21 contacts the concave side of the heating portion 111, and transmits the liquid entering the liquid inlet hole 12d to the heating member 11 for heating and atomizing, then the atomized gas is taken away by the airflow entering the air inlet 12b.

In the atomizing unit 1, the support 12 is mainly used to provide a support strength for the heating member 11, so that the heating member 11 is not easy to be deformed, meanwhile, to define, with the heating member 11, the containing chamber 13 configured for containing the liquid conducting member 21, and to compress the liquid conducting member 21 to make the liquid conducting material having a good contact with the heating member 11 directly.

The liquid conducting member 21 is disposed in the containing chamber 13 of the atomizing unit 1, and is compressed at the four peripheries by the support 12, the heating member 11, and the cover 124, and plays the role of conducting the liquid 21.

The size of the liquid inlet hole 12d can control the amount of the liquid entering the liquid conducting cotton, which can effectively prevent a liquid leakage caused by excessive liquid inlet.

The heating portion 111 is no longer circumferentially covered, thus different liquid inlet manners may be adopted according to requirements, and the liquid inlet hole 12d may be disposed at different positions, for example, may be disposed at two ends, in the second direction b, of the heating member 11; or may be disposed at a position, facing the concave side, of the heating member 11.

The arched side of the heating member 11 is better matched with the flow of the airflow, which can make the heat of the atomizing surface more uniform. The heating member 11 generally adopts a common electric heating alloy metal sheet made of iron chromium aluminum, nickel chromium alloy, stainless steel, titanium, titanium alloy, nickel iron alloy, or the like, to form an electric heating circuit through cutting, corrosion or other process. Then the heating member with the above shape is formed by shaping with a mold or a jig. The liquid conducting member 21 may be made of a porous liquid conducting cotton or a liquid conducting cotton rope.

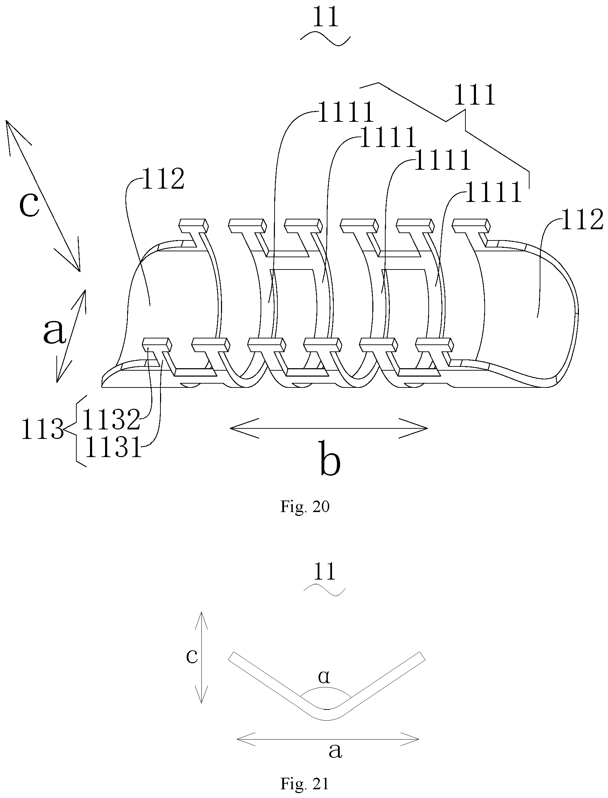

As shown in Fig. 20, in some embodiments, the two sides of the heating portion 111 in the first direction a are bent in the third direction c, making the heating portion 111 in an arc shape. Since the arc shape has a smooth transition surface, it is better matched with the airflow flowing.

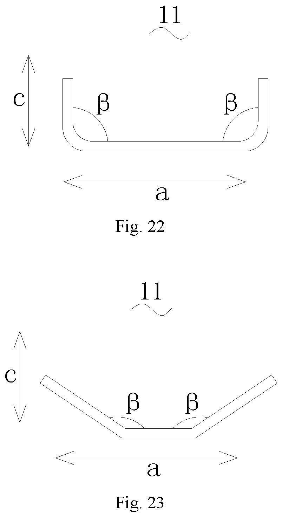

Referring to Figs. 21 to 23, in other embodiments, at least one part of the heating portion 111 is bent along the axis of the second direction b, so that the two sides of the heating portion 111 in the first direction a are bent in the third direction c. Specifically, in the embodiment shown in Fig. 21, the middle of the heating portion 111 is bent to a right angle or an obtuse angle along the axis of the second direction b, so that the parts on the two sides of the axis are bent in the third direction c, the bending angle α of the middle of the heating portion 111 along the axis of the second direction b is a right angle or an obtuse angle, and specifically, the heating portion 111 may be bent into a V shape. In the embodiments shown in Figs. 22 to 23, the two sides of the heating portion 111 in the first direction a are bent along the axis of the second direction b respectively; wherein the angle β may have different designs. In the embodiment shown in Fig. 22, the angle β at which the two sides of the heating portion 111 in the first direction a are respectively bent along the axis of the second direction b may be a right angle, and the heating portion 111 is bent into a rectangular shape. In the embodiment shown in Fig. 23, the angle β at which the two sides of the heating portion 111 in the first direction a are respectively bent along the axis of the second direction b may be an obtuse angle, and the heating portion 111 is bent into a rectangular shape.

Referring to Fig. 20, the two sides, in the first direction a, of the electrode portion 112 are also bent towards one side in the third direction c, and have a same shape and a same degree as the bends on the two sides, in the first direction a, of the heating portion 111.

As shown in Fig. 20, the number of fixing portions 113 is preferably multiple. Each fixing portion 113 includes a first portion 1131 extending outward and a second portion 1132 connected with the first portion 1131. The second portion 1132 is connected with the outer edge of the first portion 1131, and protrudes in a direction perpendicular to or inclined to the extending direction of the first portion 1131. The fixing portion 113 may be T-shaped.

As shown in Fig. 20, the electrode portions 112 include two electrode portions 112 on the two sides, in the second direction b, of the heating portion 111. The electrode portion 112 extends outward in a direction parallel to the second direction b or at an angle to the second direction b. In the first direction a, the size of the electrode portion 112 is equal to or less than the size of the heating portion 111.

The prepared heating member 11 may be molded with the support 12 through in-mold injection molding process, and the fixing portion 113 is embedded into the support 12. The support 12 is made of a high-temperature-resistant plastic. The known high-temperature-resistant plastic includes PEEK, LCP, PPS, PI, PA46, or the like. In this way, the atomization heating support 12 provides a very good support strength for the heating member 11, which can facilitate automatic production in the subsequent assembly process.

As shown in Fig. 3 to Fig. 6, the support 12 includes a base 121 and two extending portions 122 extending in a same direction from the base 121. The two extending portions 122 are spaced disposed in the second direction b, and the heating portion 111 of the heating member 11 is disposed between the two extending portions 122. The space between the protruding ends of the two extending portions 122 forms the air inlet 12b, and the interval between the parts of the two extending portions 122 located adjacent to the heating portion 111 forms the air vents 12c. The air vents 12c include two air vents 12c located on the two sides, in the first direction a, of the heating portion 111 of the heating member 11. The edge of the heating member 11 may be embedded in the extending portion 122. The base 121 and the extending portion 122 are preferably integrally formed.

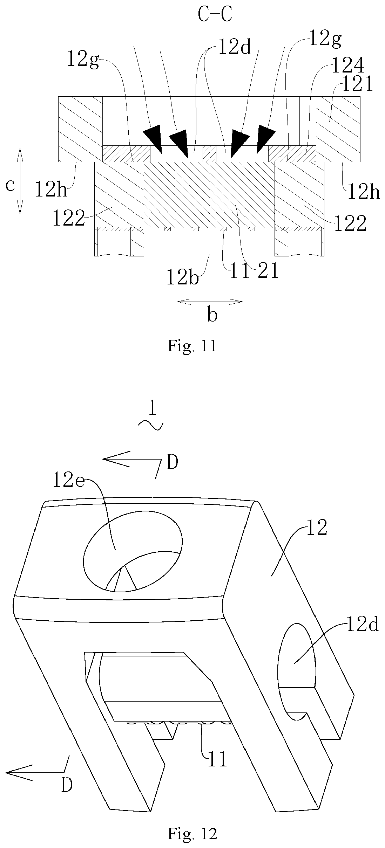

As shown in Fig. 11, the electrode portions 112 includes two electrode portions 112 on the two sides of the heating portion 111 in the second direction b respectively, and the electrode portions 112 on the two sides are respectively embedded in the extending portions 122 on the two sides.

As shown in Fig. 3 to Fig. 11, the liquid inlet hole 12d is located at a position facing the concave side of the heating portion 111, and is located at the upper part of the support 12, thereby forming an upper liquid inlet mode. The advantage is that the paths of the liquid to each part of the heating member 11 are relatively consistent, and the plastic of the liquid supplies to each parts of the heating member 11 are balanced, so there will be no problem of insufficient liquid supply locally. In the prior art, the atomizing unit 1 adopting a ceramic material heating member 11 mostly adopts such a liquid inlet mode, so the atomizing unit 1 of the present invention may have the same structure size as the ceramic atomizing unit 1, so that the remaining structure of the atomizing device 3 may directly adopt the structural design of the ceramic atomizing device 3, and an atomizing experience different from the ceramic core can be obtained only by replacing the atomizing assembly 2, so there is no need to reopen a mold after replacement, and the prior art can be replaced very quickly.

As shown in Fig. 3 to Fig. 11, the support 12 includes a base 121 and a cover 124. The cavity 12a is arranged in the base 121, and the two sides of the cavity 12a in the third direction c are open to facilitate the placing of the liquid conducting member 21 and the cover 124. The heating member 11 is arranged at an open position on the lower side, the cover 124 is arranged at an open position on the upper side and covers the containing chamber 13, and the liquid inlet hole 12d is arranged on the cover 124. Preferably, the number of the liquid inlet hole 12d is one or at least two, and the liquid inlet rate is controlled by the number or the size of the liquid inlet hole 12d.

As shown in Fig. 3 to Fig. 11, preferably, the position of the containing chamber 13 where the cover 124 is located recesses to form an inner positioning step 12g for positioning the cover 124, and the cover 124 abuts against the inner positioning step 12g to limit the liquid conducting member 21 in the containing chamber 13 and make the liquid conducting member 21 in close contact with the heating member 11. As shown in Fig. 3 to Fig. 11, an outer positioning step 12h is provided on the outer side of the support 12 for positioning the support 12. When the atomizing unit 1 is applied to the atomizing device 3, the outer positioning step 12h cooperates with the internal structure of the atomizing device 3 to achieve the positioning of the atomizing unit 1.

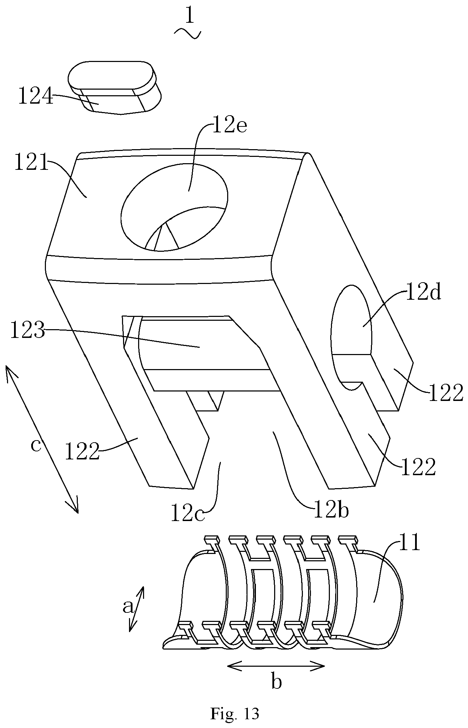

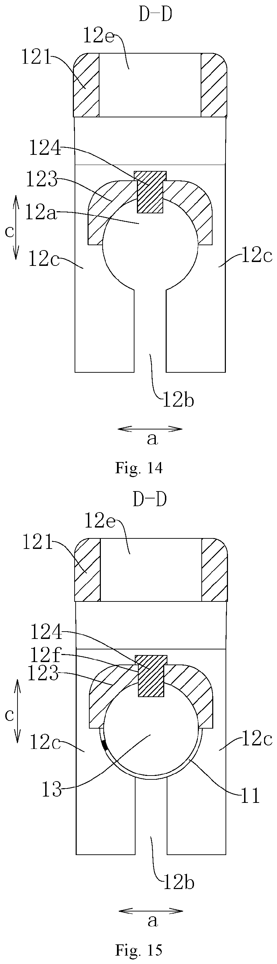

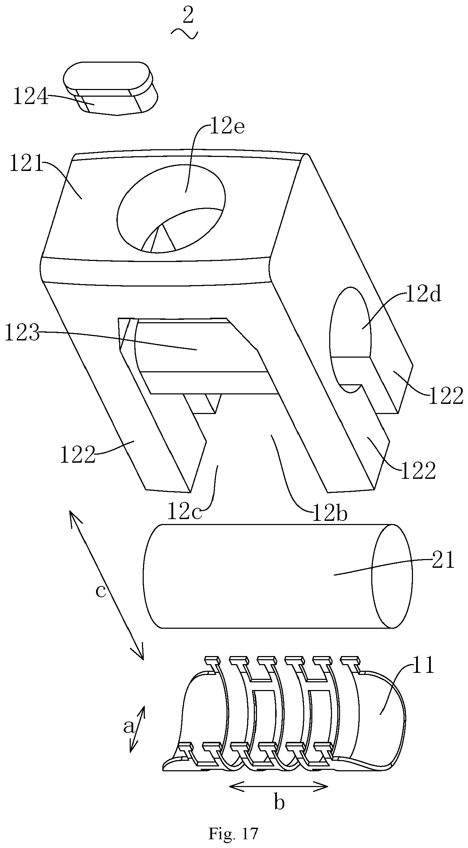

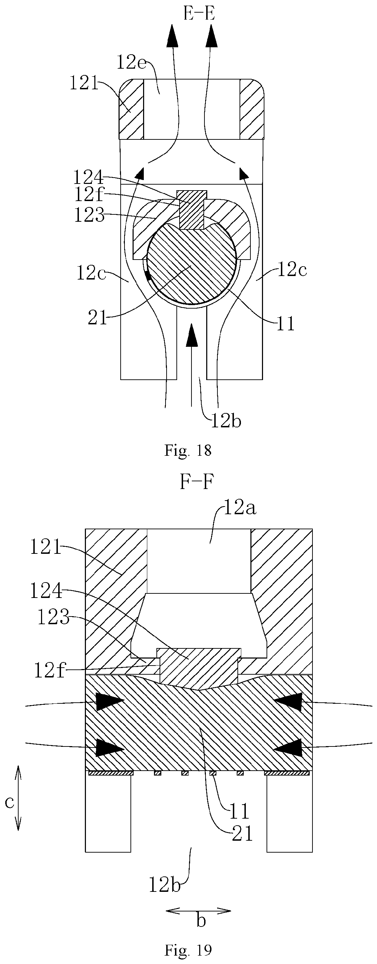

The atomizing unit in the second embodiment of the present invention is shown in Fig. 12 to Fig. 19. The liquid inlet holes 12d include two liquid inlet holes 12d on the two sides of the support 12 in the second direction b, forming a two-lateral-side liquid inlet mode. The liquid inlet hole 12d is preferably communicated with the containing chamber 13 in a straight line to facilitate the disposing of the liquid conducting member 21, for example, the liquid conducting cotton rope, and the two ends of the liquid conducting member 21 may be respectively located in the two liquid inlet holes 12d. Or alternatively, the liquid inlet hole (12d) is communicated with the containing chamber (13) obliquely, and the second direction (b) is not parallel to the first direction (a) and the third direction (c).

As shown in Fig. 12 to Fig. 19, the support 12 includes a base 121 and a cavity wall 123. The cavity wall 123 is arranged between at least two extending portions. The cavity wall 123 is bent to form the cavity 12a open to the third direction c, and at least part of the fixing portion 113 is embedded in an edge of the cavity wall 123. The support 12 is provided with an air outlet hole 12e, and the air outlet hole 12e and the heating member 11 are respectively arranged on the two sides of the support 12 in the third direction c, to allow the airflow passes through the air inlet 12b, the air vent 12c, the gap between the cavity wall 123 and the base 121, and the air outlet hole 12e sequentially, to take away the mist generated by the heating member 11. The support 12 includes the cover 124. The cavity wall 123 is provided with a through hole 12f that is communicated with the cavity 12a. The through hole 12f is located at a position facing the concave side of the heating portion 111. The cover 124 passes through the through hole 12f and extends into the cavity 12a, so that when the liquid conducting member 21 is disposed in the containing chamber 13, the cover 124 squeezes the liquid conducting member 21 to make the liquid conducting member 21 contact with the heating member 11. In the embodiment shown in Fig. 12 to Fig. 19, the support 12 is preferably made of a high-temperature-resistant plastic, and is mainly used to provide a support strength to the heating member 11, so that the heating member 11 is not easy to be deformed, meanwhile, to define, with the heating member 11, the containing chamber 13 configured for containing the liquid conducting member 21, and to compress the liquid conducting member 21 to make the liquid conducting material having a good contact with the heating member 11 directly.

As shown in Fig. 12 to Fig. 19, the heating member 11 may be made of a hollow metal sheet or a metal wire. The arched side of the heating member 11 is better adapted to the airflow flowing, which can make the heat of the atomizing surface more uniform and the heat of the atomizing surface more uniform, and make the heat of the atomizing surface more uniform and the heat of the atomizing surface more uniform. The cover 124 is mainly used to compress the liquid conducting member 21, so that the liquid conducting member 21 has a good contact with the heating member 11 directly. The liquid conducting member 21 may be disposed in the containing chamber 13 of the atomizing unit 1 and is used to conduct the liquid 21. When the liquid inlet hole 12d is communicated with the containing chamber 13 in a straight line, the liquid conducting member 21 may be disposed in the containing chamber 13 and the liquid inlet hole 12d, and the two ends of the liquid conducting member 21 in the second direction b are unrestricted.

In the embodiment shown in Fig. 12 to Fig. 19, the liquid inlet holes 12d is are disposed at the two ends, that is, the left and right ends, of the support 12 in the second direction b. The fixing portion 113 of the heating member 11 is embedded into the plastic support 12 in an in-mold injection molding manner, so that the heating member 11 has a good support strength, and then the liquid conducting member 21 is inserted into the containing chamber 13 formed by the heating member 11 and the support 12. Since the liquid conducting member 21, such as the liquid conducting cotton rope, is arranged in the containing chamber 13 in a penetrating manner, the liquid conducting member 21 cannot be designed too thick if want to ensure that the liquid conducting member 21 can smoothly pass through the containing chamber 13, otherwise the liquid conducting member 21 cannot pass through the containing chamber 13 smoothly; if the liquid conducting member 21 is designed relatively thin, it can pass through the containing chamber 13 smoothly, however, the problem of poor contact between the heating member 11 and the liquid conducting member 21 will occur. Therefore, the through hole 12f is provided on the side of support 12 in the first direction a, namely the upper side, and the cover 124 is disposed on the through hole 12f, so that the cover 124 compresses the liquid conducting member 21, making the liquid conducting member 21 and the heating member 11 contact well, so as to solve the problem of poor contact between the heating member 11 and the liquid conducting member 21.

In the above embodiments, the support 12 is preferably made of plastic, the heating member 11 is combined with the support 12 in in-mold injection molding, that is, the heating member 11 is placed in an injection mold, and then injected to form the support 12, then the support 12 is combined with the heating member 11.

In summary, the heating member 11 of the atomizing unit 1 of the present invention has a good strength, is easy for mass automatic production, has a larger atomizing area than the traditional planar heating member, is better matched with the airflow direction of atomization, and has a more uniform heat during the heating process. Moreover, the atomizing unit 1 may be applied to an electronic cigarette, and the liquid conducting member 21 conducts the e-liquid to the heating member for heating and atomizing.

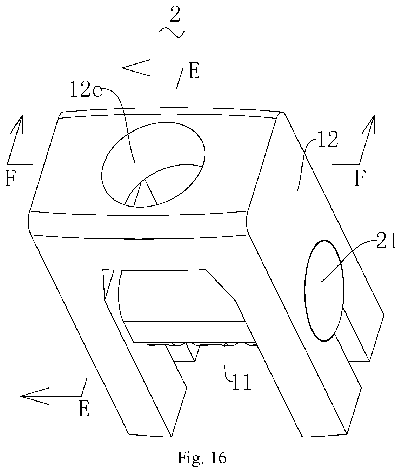

Referring to Fig. 16 to Fig. 19, an atomizing assembly 2 in an embodiment of the present invention includes a liquid conducting member 21 and the atomizing unit 1 of any one of claims 1 to 25. The liquid conducting member 21 is arranged in the containing chamber 13 of the atomizing unit 1 and is in contact with the heating member 11 to transmit the liquid from the liquid inlet hole 12d to the heating member 11 for heating and atomizing.

The atomizing assembly 2 adopts the combination of the above atomizing unit 1 and the liquid conducting member 21, the liquid conducting member 21 is disposed in the containing chamber 13 of the atomizing unit 1, the four peripheries of the liquid conducting member 21 is compressed by the support 12, the heating member 11, and the cover 124, to play the role of conducting the liquid 21. The arched side of the heating member 11 is better matched with the flow of the airflow, which can make the heat of the atomizing surface more uniform. The support 12 provides a support strength for the heating member 11 to prevent the deformation of the heating member 11, meanwhile, defines, with the heating member 11, the containing chamber 13 configured for containing the liquid conducting member 21, and compresses the liquid conducting member 21 to ensure a good direct contact between the liquid conducting material and the heating member 11. Since the heating portion 111 is no longer circumferentially covered, different liquid inlet manners may be adopted according to requirements, and the liquid inlet hole 12d may be disposed at different positions, for example, at the two ends of the heating member 11 in the second direction b, or at a position of the heating member 11 facing the concave side. The heating member 11 is no longer made by manually winding an electric heating wire around the liquid conducting member 21, but may be made by in-mold injection molding process. The heating member 11 and the support 12 are molded by in-mold injection molding, and the fixing portion 113 is embedded into the support 12, which can facilitate the automatic production in the subsequent assembly process.

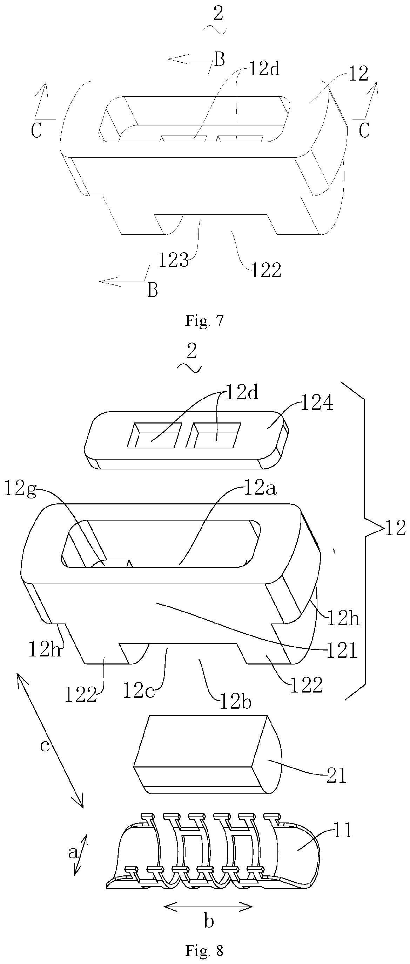

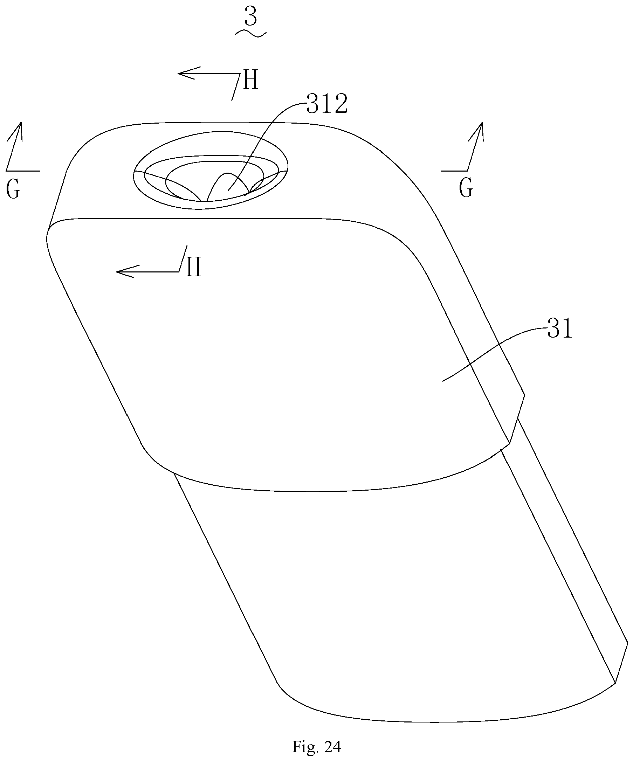

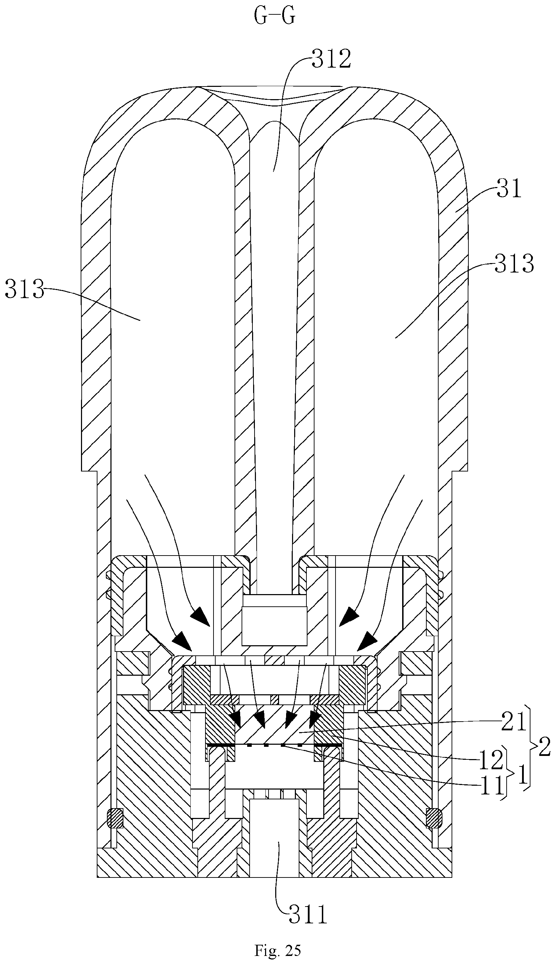

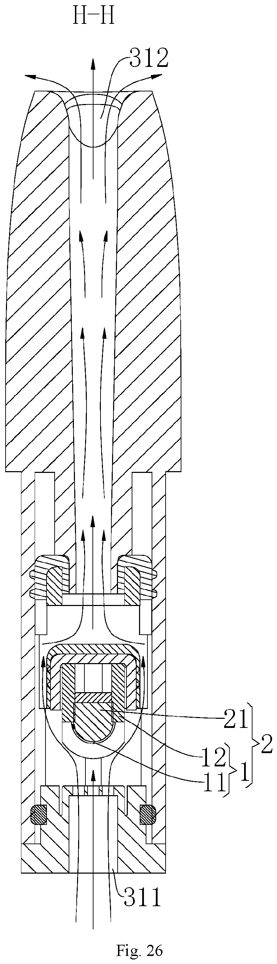

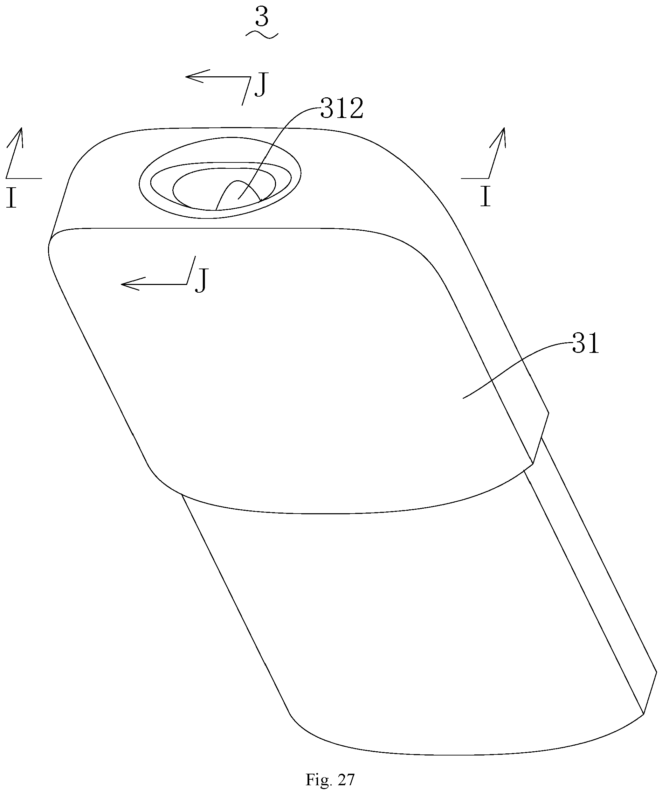

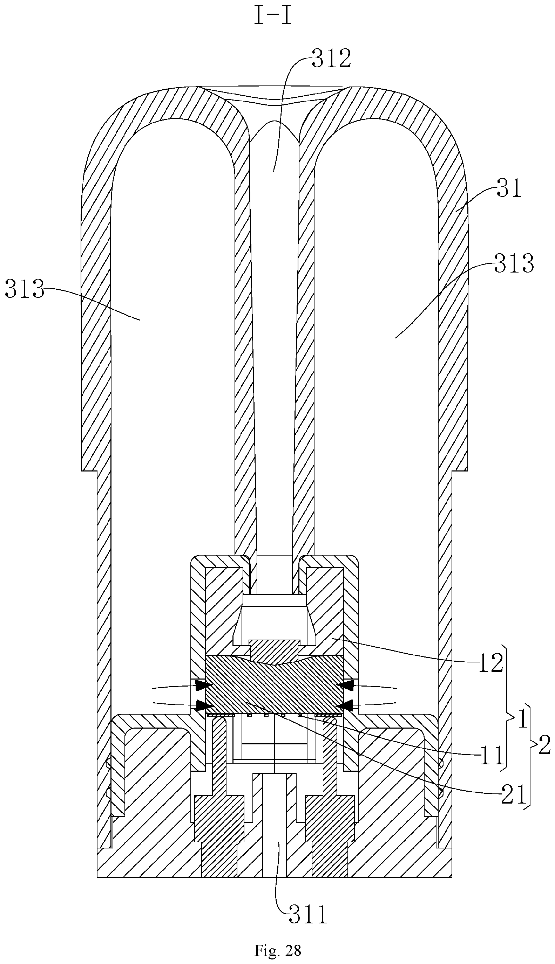

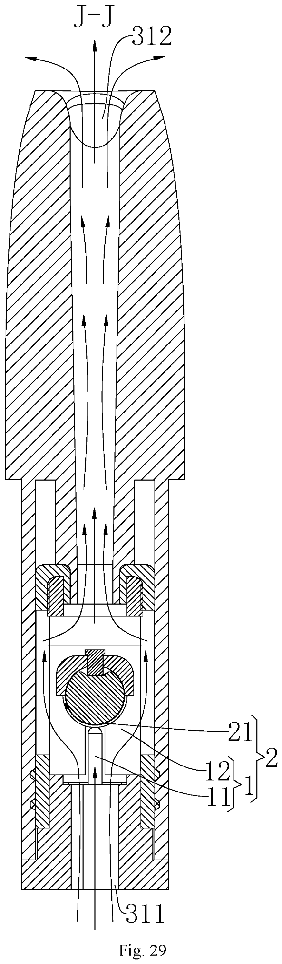

Referring to Figs. 24 to 29, an atomizing device 3 in an embodiment of the present invention includes a housing 31 and the atomizing assembly 2 of claim 26 disposed in the housing 31. The housing 31 is provided therein with a liquid storage chamber 313, an air outlet passage 312 and an air inlet passage 311. The liquid storage chamber 313 is configured for storing a liquid and is communicated with the liquid inlet hole 12d of the atomizing assembly 2. The air inlet passage 311 is communicated with the air inlet 12b of the atomizing assembly 2, and the air outlet passage 312 is communicated with the air vent 12c of the atomizing assembly 2, so that the airflow sequentially passes through the air inlet passage, the air inlet 12b, the heating member 11, the air vent 12c and the air outlet passage 312 to bring out the gas heated and atomized by the heating member 11. Specifically, in the embodiment shown in Fig. 24 to Fig. 26, the atomizing device 3 includes the atomizing assembly 2 shown in Figs. 7 to Fig. 11 of Fig. 24 to Fig. 26, which adopts the upper liquid inlet method; in the embodiments shown in Figs. 27 to 29, the atomizing device 3 includes the atomizing assembly 2 shown in Fig. 16 to Fig. 19, which adopts the liquid inlet method at two horizontal ends.

By adopting the atomizing assembly 2, the liquid conducting member 21 is disposed in the containing chamber 13 of the atomizing unit 1, and is compressed at the four peripheries by the support 12, the heating member 11 and the cover 124, and plays the role of conducting the liquid 21. The arched side of the heating member 11 is better matched with the flow of the airflow, which can make the heat of the atomizing surface more uniform. The support 12 provides a support strength for the heating member 11 to prevent the deformation of the heating member 11, meanwhile, defines, with the heating member 11, the containing chamber 13 configured for containing the liquid conducting member 21, and compresses the liquid conducting member 21 to ensure a good direct contact between the liquid conducting material and the heating member 11. Since the heating portion 111 is no longer circumferentially covered, different liquid inlet manners may be adopted according to requirements, and the liquid inlet hole 12d may be disposed at different positions, for example, at the two ends of the heating member 11 in the second direction b, or at a position of the heating member 11 facing the concave side. The heating member 11 11 is no longer made by manually winding an electric heating wire around the liquid conducting member 21, but may be made by in-mold injection molding process. The heating member 11 and the support 12 are molded by in-mold injection molding, and the fixing portion 113 is embedded into the support 12, which can facilitate the automatic production in the subsequent assembly process.

When the atomizing device 3 is the electronic cigarette, the liquid storage chamber 313 of the atomizing device 3 is configured to store the e-liquid, and the liquid conducting member 21 transmits the e-liquid to the heating member for heating and atomizing.

The foregoing embodiments only show exemplary implementations of the present invention, and cannot be understood as a limitation to the patent scope of the present invention. It should be noted that a person of ordinary skill in the art may combine the foregoing technical features randomly and further make several variations and improvements without departing from the idea of this application. Therefore, all equivalent changes and modifications made according to the scope of the claims of the present invention shall fall within the scope of the claims of the present invention.

## Claims

1. An atomizing unit (1), comprising:
a support (12); and
a heating member (11) that is sheet shaped and arranged on the support (12),
wherein the heating member (11) comprises a heating portion (111), an electrode portion (112) and a fixing portion (113),
wherein two sides of the heating portion (111) in a first direction (a) are bent in a third direction (c), so that one side of the heating portion (111) in the third direction (c) is concave and the other side of the heating portion (111) in the third direction (c) is arched,
wherein the heating portion (111) comprises a heating circuit (1111) electrically connected with the electrode portion (112) to generate heat when the electrode portion (112) is powered on,
wherein the fixing portion (113) is embedded in the support (12),
wherein the support (12) is provided with a cavity (12a) having an opening towards the first direction (a), the heating member (11) is arranged on the support (12), the heating portion (111) is arranged at the opening of the cavity (12a), and the fixing portion (113) is embedded in the support (12),
wherein the concave side of the heating portion (111) faces the cavity (12a), and defines, with the cavity (12a), a containing chamber (13) configured for accommodating a liquid conducting member and making the liquid conducting member contact the heating member (11),
wherein the support (12) is provided with a liquid inlet hole (12d) communicated to the containing chamber (13) for a liquid to enter the containing chamber (13), and
wherein the first direction (a) and the third direction (c) are not parallel to each other,
thus, when the liquid conducting member is provided in the containing chamber (13) and conducts the liquid from the liquid inlet hole (12d) to the heating member (11), the heating member (11) heats and atomizes the liquid.

2. The atomizing unit (1) of claim 1, wherein the two sides of the heating portion (111) in the first direction (a) are bent in the third direction (c), so that the heating portion (111) is arc-shaped.

3. The atomizing unit (1) of claim 1, wherein at least one part of the heating portion (111) is bent to a right angle or an obtuse angle along an axis of a second direction (b), so that the two sides of the heating portion (111) in the first direction (a) are bent in the third direction (c), and the second direction (b) is not parallel to the first direction (a) and the third direction (c).

4. The atomizing unit (1) of claim 1, wherein two sides of the electrode portion (112) in the first direction (a) are bent towards one side in the third direction (c).

5. The atomizing unit (1) of claim 1, wherein at least two of the fixing portions (113) are arranged at peripheries of the heating portion (111) and/or the electrode portion (112).

6. The atomizing unit (1) of claim 1, wherein the fixing portion (113) comprises a first portion (1131) extending outwards and a second portion (1132) connected with the first portion (1131), and
wherein the second portion (1132) protrudes in a direction perpendicular to or inclined to an extending direction of the first portion (1131).

7. The atomizing unit (1) of claim 1, wherein the electrode portion (112) comprises two of the electrode portions (112) respectively located on two sides of the heating portion (111) in a second direction (b),
wherein the electrode portion (112) extends outwards in a direction parallel to the second direction (b) or at an angle to the second direction (b), and
wherein the second direction (b) is not parallel to the first direction (a) and the third direction (c).

8. The atomizing unit (1) of claim 1, wherein the support (12) is provided with an air inlet (12b) for airflow to enter and an air vent (12c) for the airflow to outflow,
wherein the air inlet (12b) is communicated with the air vent (12c), and
wherein the arched side of the heating portion (111) faces the air inlet direction of the air inlet (12b), and the two sides of the heating portion (111) in the first direction (a) correspond to the air vent (12c), to allow the airflow blowing to the arched side of the heating portion (111) and flowing by the two sides of the heating portion (111) in the first direction (a) to take away the mist generated by the heating member (11).

9. The atomizing unit (1) of claim 8, wherein the support (12) comprises a base (121) and two extending portions (122) protruding from the base (121) in a same direction,
wherein the two extending portions (122) are spaced disposed in a second direction (b),
wherein the heating portion (111) of the heating member (11) is disposed between the two extending portions (122),
wherein a space between the protruding ends of the two extending portions (122) forms the air inlet (12b),
wherein an interval between the parts of the two extending portions (122) adjacent to the heating portion (111) forms the air vent (12c),
wherein the air vent (12c) comprises two of the air vents (12c) respectively located on the two sides, in the first direction (a), of the heating portion (111) of the heating member (11), and
wherein the second direction (b) is not parallel to the first direction (a) and the third direction (c).

10. The atomizing unit (1) of claim 9, wherein the electrode portion (112) comprises two of the electrode portions (112) respectively located on the two sides of the heating portion (111) in the second direction (b), and
wherein the electrode portions (112) on the two sides are respectively embedded in the extending portions (122) on the two sides.

11. The atomizing unit (1) of claim 1, wherein the liquid inlet hole (12d) is arranged at a position facing the concave side of the heating portion (111).

12. The atomizing unit (1) of claim 11, wherein the support (12) comprises a base (121) and a cover (124),
wherein the cavity (12a) is arranged in the base (121),
wherein two sides of the cavity (12a) in the third direction (c) are open,
wherein the heating member (11) is arranged at an open position on one side, and the cover (124) is arranged at another open position on the other side and covers the containing chamber (13), and
wherein the liquid inlet hole (12d) is arranged on the cover (124).

13. The atomizing unit (1) of claim 1, wherein the liquid inlet hole (12d) comprises two of the liquid inlet holes (12d) respectively located on two sides of the support (12) in a second direction (b).

14. The atomizing unit (1) of claim 13, wherein the liquid inlet holes (12d) are communicated with the containing chamber (13) in a straight line, or the liquid inlet holes (12d) are communicated with the containing chamber (13) obliquely, and
wherein the second direction (b) is not parallel to the first direction (a) and the third direction (c).

15. The atomizing unit (1) of claim 14, wherein the support (12) comprises a base (121) and a cavity wall (123), the cavity wall (123) is bent to form the cavity (12a) open to the third direction (c), and at least part of the fixing portion (113) is embedded in the cavity wall (123).

16. The atomizing unit (1) of claim 15, wherein the support (12) is provided with an air outlet hole (12e), and the air outlet hole (12e) and the heating member (11) are respectively arranged on two sides of the support (12) in the third direction (c).

17. The atomizing unit (1) of claim 15, wherein the support (12) comprises a cover (124),
wherein the cavity wall (123) is provided with a through hole (12f) that is communicated with the cavity (12a) and located at a position facing the concave side of the heating portion (111), and
wherein the cover (124) penetrates in the through hole (12f) and extends in the cavity (12a), so that when the liquid conducting member (21) is provided in the containing chamber (13), the cover (124) presses the liquid conducting member to make the liquid conducting member contact the heating member (11).

18. The atomizing unit (1) of claim 1, wherein the support (12) is made of plastic, and the heating member (11) is combined with the support (12) through an in-mold injection.

19. An atomizing assembly (2), comprising:
a liquid conducting member (21); and
the atomizing unit (1) of any one of claims 1 to 18,
wherein the liquid conducting member (21) is disposed in the containing chamber (13) of the atomizing unit (1) and is in contact with the heating member (11), to conduct the liquid from the liquid inlet hole (12d) to the heating member (11) for heating and atomizing.

20. An atomizing device (3), comprising:
a housing (31); and
the atomizing assembly (2) of claim 19 that is disposed in the housing (31),
wherein the housing (31) is provided with an air outlet passage (312) and an air inlet passage (311), so that airflow sequentially passes through the air inlet passage, the heating member (11) and the air outlet passage (312), to bring out the mist heated and atomized by the heating member (11).
